# EUROPÄISCHE PATENTSCHRIFT

(11) **EP 1 270 466 B1**
(45) Veröffentlichungstag und Bekanntmachung des Hinweises auf die Patenterteilung: **13.10.2004**
(21) Anmeldenummer: 01115565.2
(22) Anmeldetag: 28.06.2001
(51) Int. Cl.: B65G 69/18

(54) **Verschluss**
Closure
Fermeture

(43) Veröffentlichungstag der Anmeldung: 02.01.2003
(73) Patentinhaber: montena SA, 1753 Matran (CH)
(72) Erfinder: Leva, Daniel, CH 1635 La Tour-de-Trême (CH); Nussbaumer, Arthur, CH-3186 Düdingen (CH)
(74) Vertreter: Révy von Belvárd, Peter

(56) Entgegenhaltungen:
- EP-A- 0 646 533
- EP-A- 0 704 394
- WO-A-00/34163
- WO-A-98/43902

## Beschreibung

Die Erfindung betrifft eine Hygienevorrichtung nach dem Oberbegriff des Anspruches 1

Behälter für rieselfähiges Schüttgut müssen auch über grössere Strecken transportiert oder über längere Zeit gelagert werden. Sowohl während des Transports als auch während der Lagerung der Behälter kann es zur Verschmutzung der Behälter kommen, was insbesondere im Bereich des Verschlusses eines Behälters sehr nachteilig ist, wenn beispielsweise ein chemischer Stoff für medizinische Anwendungen od. dgl. im Behälter gelagert ist.

Um die Verschmutzung durch Staub beispielsweise auch des Inneren eines Verschlusskonus zu entfernen, wurde bereits vorgeschlagen, zur Reinhaltung bzw. Hygienisierung eine Druckluft-Reinigung des Auslassbereiches gemäss WO 98/43902 über Saugdüsen und gemäss WO 00/34163 über Blasdüsen durchzuführen.

Vor allem während des Strassen-Transports eines Behälters legt sich an den Behälter Staub an, der mit Öl oder anderen Kohlenwasserstoffen versetzt sein kann. Eine derartige Verschmutzung ist aber mit einer Druckluft-Reinigung nicht ausreichend entfernbar. Für eine solche Reinigung sind die Reinigungsdüsen auch in nachteiliger Weise baulich schwer so anzubringen, dass deren Reinigungsstrahl die innere Oberfläche eines z.B. konisch ausgebildeten Verschlussgliedes überhaupt wirksam erreicht. Gerade aber der Verschluss und seine nach aussen gekehrten Flächen sind deshalb von grosser Wichtigkeit, weil in diesem Bereich auch das, unter Umständen sehr heikle, chemische oder pharmazeutische, Schüttgut durch während des Behältertransportes angelagerte Verunreinigungen kontaminiert werden kann.

Der Erfindung liegt daher die Aufgabe zugrunde, eine Hygienevorrichtung für Behälter zu schaffen, die es ermöglicht, eine Verschmutzung insbesondere des Bereichs von dessen Austrittsöffnung bzw. der dortigen exponierten bzw. dem Staub ausgesetzten Flächen am Verschluss zu unterbinden.

Gemäss der Erfindung wird daher für eine Schutzvorrichtung der eingangs erwähnten Art vorgeschlagen, dass der Deckel im Randbereich (5) als elastisch verformbare Dichtung ausgebildet ist, die mindestens einen Teil der Anlagefläche aufweist und an die einen Trichter bildende Wand des Behälters anlegbar, vorzugsweise anpressbar, ausgebildet ist.

Hierdurch wird in vorteilhaft einfacher Weise eine äusserst wirkungsvolle Einrichtung zum Schutz gegen Verschmutzung geschaffen, die auch allen hygienischen Auflagen genügt. Durch die Erfindung wird somit ein Hygienedeckel geschaffen, der mit geringem geräteseitigem Aufwand am Behälter befestigt und auch von diesem wieder entfernt werden kann.

Zwar ist eine Art Deckel nach dem Oberbegriff des Anspruches 1 bereits aus der EP-A-0 704 394 bekannt geworden. Dabei ist jedoch keine Dichtung am Deckel selbst vorgesehen, vielmehr wirkt der Deckel 1 mit einer Dichtung des Verschlusskonus zusammen, d.h. er ist nach oben hin offen und liegt auch nicht an der Aussenseite des Trichters an. Offenbar ist sein Zweck auch ein anderer, denn dann kann während des Transportes und während der Handhabung Staub von der Aussenseite des Trichters in den Hygienedeckel fallen, so dass dieser selbst kontaminiert wird. Dies wird erfindungsgemäss dadurch verhindert, dass die Dichtung (und der Deckel) so ausgebildet ist, dass die Dichtung am Trichter bzw. dessen Aussenseite erfolgt. Denn dadurch kann gesichert werden, dass etwaige von der Aussenseite herabfallende Verunreinigungen über die abgedichtete Stelle hinwegrieseln.

Die erfindungsgemässe Ausbildung der Hygienevorrichtung gestattet auch die wiederholte Wiederverwendung der Hygienevorrichtung, sowie deren einfache und schnelle Reinigungsmöglichkeit. Alle diese vorteilhaften Eigenschaften sind ein Ergebnis der erfindungsgemässen Konstruktion der Hygienevorrichtung, die hierdurch sehr ökonomisch wird. Eine einfache Konstruktion mit eher nicht zu erwartender Reparaturanfälligkeit und oftmalige Wiederverwendung halten die Lebens-Zykluskosten der erfindungsgemässen Hygienevorrichtung äusserst gering.

Gemäss einem weiteren Merkmal der Erfindung wird hierzu vorgeschlagen, dass der Deckel zur Gänze aus elastisch verformbarem Material gebildet ist, wodurch dessen Herstellung vereinfacht wird, wenn dieser Deckel beispielsweise in einer Gussform in Serie hergestellt wird. Vor allem für kleine Behälter bzw. kleine Austrittsöffnungen ist ein derartig ausgebildeter Deckel gut geeignet.

Es ist aber in weiterer Ausgestaltung der Erfindung auch vorgesehen, dass der Deckel Zonen unterschiedlicher elastischer Verformbarkeit aufweist, was insbesondere für grössere Behälter von Vorteil sein kann, da durch diese besondere erfindungsgemässe Ausbildung auch eine vorbestimmte Eigenstabilität des Deckels erzielbar ist.

Vorteilhaft einfach wird eine sehr gute Dichtwirkung und einfache Befestigung am Behälter erreicht, wenn in weiterer Ausgestaltung der Erfindung vorgesehen wird, dass die elastische Verformbarkeit des Deckels in der die Wandung des Behälters und des Verschlussgliedes im Randbereich der Austrittsöffnung abdeckenden Zone grösser ist als im zentralen Bereich der Austrittsöffnung.

Nach einem weiteren Merkmal der Erfindung wird eine besonders wirkungsvolle Abdichtung und Halterung der Hygienevorrichtung dadurch erreicht, dass zumindest in der Zone der grösseren elastischen Verformbarkeit des Deckels Federelemente im Werkstoff, vorzugsweise auch ausserhalb an der vom Behälter abgekehrten Fläche des Deckels angeordnet sind, die die als Klemmeinrichtung ausgebildete Halteeinrichtung für den Deckel am Behälter und/oder am Verschlussglied zumindest teilweise bilden.

Besonders einfach herstellbar und wirkungsvoll wird die Hygienevorrichtung. wenn nach einem weiteren Merkmal der Erfindung vorgesehen wird, dass der elastisch verformbare Deckel für einen Behälter mit nach innen ragendem konusförmigem Verschlussglied, das einen nach aussen offenen kegelförmigen Hohlraum aufweist, im Randbereich der Austrittsöffnung eine federbelastete U-förmige Zone aufweist, die bei an den Behälter gedrücktem Deckel die Austrittsöffnung, insbesondere diese. Randbereiche der Wandung des Behälters und des Verschlussgliedes hermetisch, zumindest staubdicht und spritzwasserfest abdichtet. Zwar ist eine absolute Dichtheit an sich nicht kritisch, doch wird dem Zweck der Erfindung durch eine hermetische Abdichtung am besten Genüge getan.

Um die Hygienevorrichtung einfachst und funktionssicher handhaben zu können, wird nach einem weiteren Merkmal der Erfindung vorgeschlagen, dass der Deckel in seinem zentralen Bereich mindestens eine Fläche zur Anlage, insbesondere zur Ankoppelung eines Verschiebegliedes aufweist, das vorzugsweise als Stempel ausgebildet ist.

Besonders vorteilhaft einfach wird die Handhabung der Hygienevorrichtung, wenn nach einem weiteren erfindungsgemässen Merkmal vorgesehen wird, dass der Stempel der mindestens einen Fläche zur Anlage, insbesondere Ankoppelung des Deckels, gegenübreliegend angeordnet eine od. mehrere Saugöffnungen, Saugdüsen od. dgl. aufweist, über die im Raum zwischen Deckel und Stempel Unterdruck und eine kraftschlüssige Verbindung bzw. Koppelung zwischen Deckel und Stempel zumindest zur Entfernung des Deckels vom Behälter herstellbar ist.

Nach einem weiteren Merkmal der Erfindung ist vorgesehen, dass der Stempel im Bereich der im Querschnitt U-förmigen Zone des Deckels eine sich zu diesem vorzugsweise parallel erstreckende Anpressfläche für den Deckel aufweist. Hierdurch wird einfachst ein Heranführen des Deckels an den Behälter und die sichere Klemmung am Behälter erreicht.

Bei einer weiteren bevorzugten erfindungsgemässen Ausbildungsform der Erfindung ist vorgesehen, dass der Deckel topfförmig ausgebildet ist, vorzugsweise als lediglich in Richtung zur Austrittsöffnung des Behälters hin runder und offener Topf, der eine den Boden des Deckels umgebende Wandung aufweist, der in einem, vorzugsweise geringen, Abstand die elastisch verformbare Dichtung, ausgebildet als Ringdichtung, im topfförmigen Deckel gegenüberliegend angeordnet ist und dass diese Ringdichtung in peripherer Richtung zur Wandung des topfförmigen Deckels pressbar ist, wobei bei geschlossenem Verschlussglied die Austrittsöffnung und die zu dieser benachbarte Wandung des Behälters zwischen der Wandung des topfförmigen Deckels und der Ringdichtung liegend vorgesehen ist. Diese erfindungsgemässe Ausführungsform ist äusserst vorteilhaft an Behältem einzusetzen, für die es zweckmässig ist, den Hygienedeckel bspw. aus Blech zu fertigen. Diese erfindungsgemässe Hygienevorrichtung weist grösste Stabilität auf und kann somit äusserst vorteilhaft auch für sehr grosse Austrittsöffnungen verwendet werden.

Zur sicheren Halterung der Hygienevorrichtung am Behälter wird in weiterer Ausgestaltung der Erfindung vorgeschlagen, dass zur peripheren Pressung der Ringdichtung an die Wandung des Behälters, vorzugsweise an dessen Innenwandung ausserhalb des Verschlussgliedes, mindestens ein Federelement an einem innerhalb des Deckels angeordneten Tragelement angeordnet ist, das über eine vorzugsweise mechanische Stelleinrichtung in seiner Position und/oder Streckung in Richtung zur Ringdichtung veränderbar ausgebildet ist. Diese Konstruktion wird besonders vorteilhaft, wenn nach einem weiteren erfindungsgemässen Kennzeichen vorgesehen wird, dass das Federelement als vorgespannte Tellerfeder mit sektorförmigen Ausnehmungen ausgebildet ist, an welcher ein an sich starr ausgebildeter und zu dieser konzentrisch angeordneter Stützkorb anliegt, der in seinem Abstand zur Tellerfeder und auch zum Deckel über die Stelleinrichtung einstellbar ist.

In einfachster Weise kann die Haltewirkung der Hygienevorrichtung nach einem weiteren Merkmal der Erfindung sicherer dadurch erreicht werden, dass an der ringförmigen Dichtung des Deckels eine ringförmige Nut vorgesehen ist, in die das Federelement ragt, vorzugsweise einrastet.

Für die einfache Handhabung dieser Hygienevorrichtung wird nach einer bevorzugten Ausführungsform der Erfindung vorgeschlagen, dass zumindestens ein Betätigungselement der Stelleinrichtung gedichtet durch den Boden des Deckels geführt ist.

Ebenfalls zur einfachen Handhabung bzw. Anbringung der Hygienevorrichtung am Behälter und zur Entfernung von diesem wird in weiterer Ausgestaltung der Erfindung vorgeschlagen, dass der Deckel in seinem peripheren Bereich eine vorzugsweise als Zylinderfläche ausgebildete Anlagefläche für einen in seinem Querschnitt durch ein Druckmedium, wie Pressluft od. dgl. erweiterbaren ringförmigen Hohlkörper aufweist, der am Verschiebeglied zum Anpressen des Deckels an den Behälter bzw. zur Entfernung des Dekkels vom Behälter vorgesehen ist, wobei, vorzugsweise, das Verschiebeglied mit einem Stützflansch für den Deckel versehen ist. Hierdurch wird die Hygienevorrichtung äusserst einfach, aber auch schnell am Behälter montierbar und demontierbar.

Die Erfindung ist in den Zeichnungen in mehreren Ausführungsformen schematisch beispielsweise dargestellt. Hierbei zeigen
- Fig. 1: eine erste Ausführungsform der Hygienevorrichtung,
- Fig. 2: eine zweite Ausführungsform der Hygienevorrichtung,
- Fig. 2a: ein Detail der Hygienevorrichtung gemäss Fig. 2 und
- Fig. 3: eine dritte Ausführungsform der Hygienevorrichtung.

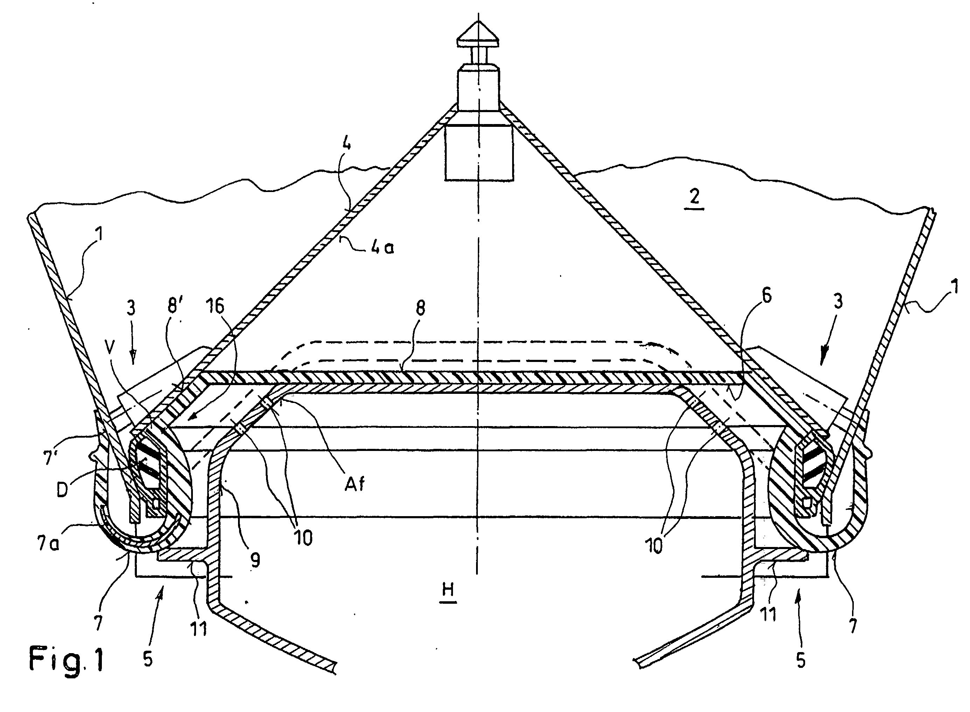

In Fig. 1 ist mit 1 die Wandung eines Behälters 2 bezeichnet. Diese Wandung 1 stellt einen Trichter dar, der der Unterteil eines im wesentlichen senkrecht angeordneten zylindrischen Behälters 2 ist. Das untere Ende des Trichters hat eine Austrittsöffnung 3 für den im Behälter 2 gelagerten Stoff, der ein rieselfähiges Material, insbesondere ein Pulver.

Die Austrittsöffnung 3 ist, wie dargestellt, durch ein konisches, allenfalls aber auch kegelstumpfförmiges, Verschlussglied 4 verschlossen. Das Verschlussglied 4 ist somit als nach unten offener, hohler und konusartiger, im Innenraum des Behälters 2 untergebrachter und zum Öffnen in diesen einschiebbarer Bauteil ausgebildet. Um die Dichtheit der Austrittsöffnung 3 in der Geschlossenstellung des Verschlussgliedes 4 zu sichern, ist am unteren Umfangsrand des Verschlussgliedes 4 in bekannter Weise eine einen nach aussen, vorzugsweise aber auch nach innen, einen Wulst bildende Dichtung D vorgesehen. Dabei legt sich der äussere Wulst gegen die Behälterwandung 1, wogegen der bevorzugt vorgesehene Innenwulst eine innere Nut 16 begrenzt. Es versteht sich aus der folgenden Erläuterung, dass der Zweck dieser Nut 16 auch durch jede andere Ausnehmung im Verschlussglied 4 erhalten werden kann.

Wenn nun der Behälter 1 über eine Strecke transportiert werden soll, wobei das Verschlussglied in der gezeigten Geschlossenstellung liegt, und dabei die Gefahr einer Verstaubung, insbesondere der Innenfläche 4a gegeben ist, so ist zur Abdichtung gegen eine solche Verschmutzung eine Hygienevorrichtung in Form eines Deckels 6 vorgesehen, der in diesem Bereich während des Transports oder während der Lagerung des Behälters 2 an diesem dicht befestigt wird. Das Befestigen kann an sich auf verschiedene Weise erfolgen, beispielsweise könnte der Deckel ohne den ersichtlichen Randbereich 5 nur mit dem aufwärts ragenden Mittelteil ausgebildet und dort mittels Ultraschall oder einem wasserlöslichen Klebemittel dichtend befestigt werden.

Der Deckel 6 ist aber vorzugsweise aus elastisch verformbarem Material gefertigt und ist hierdurch nicht nur zur Abdeckung des nach unten und somit nach aussen offenen Verschlussgliedes 4 vorgesehen, sondern im Randbereich 5 auch als sich mit einer Anlagefläche 7' elastisch anlegende Dichtung 7 rund um die verschlossene Austrittsöffnung 3 vorgesehen.

In den elastisch verformbaren Deckel 6 kann ein Federelement 7a, z.B. aus Federstahl, eingelegt sein. Es können auch mehrere Federelemente eingelebt sein, die im wesentlichen im peripheren Bereich des Deckels 6 die im Querschnitt des Deckels 6 U-förmige Dichtung 7 definieren und zusätzlich zur Elastizität des Materials des Deckels 6 die Klemmwirkung des Deckels 6 mit seinem integrierten Dichtungsbereich als Dichtung 7 an der Wandung 1 des Behälters 2 und an der Innenwandung des Verschlussgliedes 4 erhöhen. Hierdurch wird durch die Dichtung 7 mit ihrer Anlagefläche 7' selbst eine Halteeinrichtung für den Deckel 6 als Hygienevorrichtung gebildet. Sollte der Deckel 5 ohne den Randbereich 5 ausgebildet werden, so versteht es sich, dass die Anlagefläche 7' radial weiter innen, beispielsweise im Bereiche einer konischen Fläche 8' zu liegen kommt, wobei noch erläutert wird, dass diese Fläche 8' ebenfalls als Teil der gesamten Anlagefläche wirkt.

Das Federelement muss jedoch nicht in den Werkstoff eingelegt sein. Es ist konstruktiv auch vorgesehen, dass das Federelement auch an der vom Behälter 2 entfernt vorgesehenen Oberfläche des Deckels 6 angeordnet ist. Dies ist auch für mehrere Federelemente möglich. Zur weiteren Erhöhung der Klemm- und Haltewirkung der Dichtung 7 oder alternativ, kann in nicht dargestellter Weise der Deckel 6 auch einen kreisringförmigen Wulst weisen, der einen kreisringförmigen Vorsprung des Verschlussgliedes 4 oder der äusseren Wand 1 umgreift.

Die erfindungsgemässe Konstruktion ermöglicht es so, dass die Hygienevorrichtung auch allen hygienischen Anforderungen für die Handhabung von Behältem 2 entspricht. Daher bildet der Deckel 6 im wesentlichen einen Hygiene-Deckel.

Um den Deckel 6 an den Behälter 2 bzw. an das Verschlussglied 4 heranzuführen und an diesem anzubringen, weist der Deckel eine Fläche 8, 8' zur Anlage und auch zur kraftschlüssigen Ankoppelung eines als Verschiebeglied dienenden Stempels 9 auf, der entweder von Hand - bevorzugt maschinell, z.B. über ein Handhabungsgerät - an das Verschlussglied 4 herangeführt wird. Der Stempel 9 besitzt in der Ausführungsform mehrere Saugöffnungen 10 an einer konischen Aufspannfläche Af. Zum Heranführen des Deckels 6 an den Behälter 2 wird der Deckel auf das Verschiebeglied 9 aufgespannt. Zum besseren Halt wird dann vorteilhaft ein Hohlraum H des Verschiebegliedes 9 (der Stempel 9 könnte aber auch geschwenkt werden, was aber nicht bevorzugt ist) evakuiert, wodurch über die Saugöffnungen 10, die auch als Saugdüsen ausgebildet sein können, der Deckel 6 fest am Verschiebeglied 9 anliegt und überdies der Querschnitt der U-förmigen, die Dichtung 7 bildenden, Zone des Deckels 6 unter elastischer Verformung erweitert wird. Hierdurch kann nun in einfacher Weise mittels des Verschiebegliedes 9 der Deckel 6 an den zu dichtenden bzw. zu schützenden Bereich 4a, 5 geführt werden.

Durch Wiederherstellung normaler Luftdruckverhältnisse im Inneren des Verschiebegliedes 9 löst sich der Deckel 6 von der äusseren Form des Verschiebegliedes 9 und durch die Elastizität des Werkstoffes, gegebenenfalls unterstützt durch die beschriebenen Federelemente, aber jedenfalls unterstützt durch die im wesentlichen ringförmige Anpressfläche 11 des Verschiebegliedes 9 und legt sich unter elastischer Rückkehr aus der strichliert gezeigten Stellung in seine mit vollen Linien dargestellte Ausgangslage an die zu schützenden Bauteile des Behälters 2 an. Dabei schnappt ein Vorsprung V des Dekkels 6 in die schon erwähnte Nut 16 ein und hält so den Deckel 6 ebenso fest, wie die Anlagefläche 7' die Behälterwand 1 umklammert. Gegebenenfalls kann die Wand 1 in diesem Bereich einen Ringwulst aufweisen, um der Fläche 7' einen besseren Halt zu geben, doch wird der Winkel der Wand 1 im allgemeinen so steil sein, dass dies nicht erforderlich ist. Zum Entfernen des Deckels 6 vom Behälter 2 werden die oben beschriebenen Massnahmen bzw. Funktionsabläufe in umgekehrter Reihenfolge durchgeführt. Die Anpressfläche 11 könnte von einzelnen flanschartig abstehenden und um den Umfang des Stempels 9 verteilten Lappen gebildet sein, umrundet aber vorzugsweise den Stempel in Form eines Flansches.

Je nach Bauweise des Behälters 2, gegebenenfalls je nach dessen Grösse und/oder Grösse der Austrittsöffnung 3 kann der Deckel 6 aus unterschiedlich elastisch verformbaren Material gefertigt sein. Es liegt durchaus im Rahmen der Erfindung den Deckel 6 auch in einer oder mehreren Zonen unterschiedlich elastisch verformbar zu gestalten, beispielsweise in konzentrischen Kreisen. Wesentlich hierbei ist jedoch bei der bevorzugten Ausführung, dass stets ausreichende Elastizität im Bereich der Dichtung 7 gegeben ist, um zumindest Staub- und Spritzwasserdichtheit zu gewährleisten.

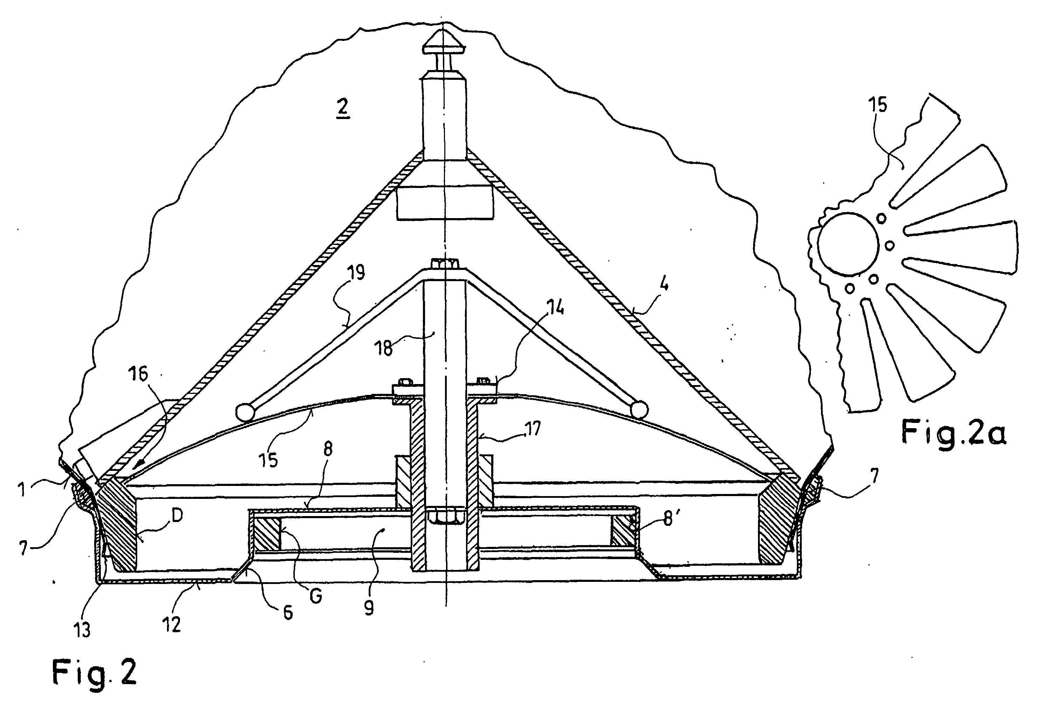

Dies kann aber auch durch eine Hygienevorrichtung gemäss der Ausführungsform nach Fig. 2 erreicht werden. Bei dieser Ausführungsform sind mit der Ausführungsform gemäss Fig. 1 übereinstimmende bzw. vergleichbare Bauteile mit gleichen Bezugszeichen versehen.

Der Deckel 6 ist in diesem Falle beispielsweise aus Blech gefertigt und weist durch seinen Boden 12 umgebende Wandung 13 nach oben offene topfförmige Gestalt auf. In geringem Abstand zur Wandung 13, im Inneren des Deckels 6 ist die Dichtung 7 vorgesehen. Zwischen der Wandung 13 und der Dichtung 7 liegt die Wandung 1 des Behälters 2, der in diesem Bereich wie bereits an Hand der Fig. 1 beschrieben hygienisch abzudichten ist.

Zur Handhabung dieser Hygienevorrichtung bzw. zur Aktivierung der Dichtwirkung der Dichtung 7 ist diese gegen die Wandung 1 des Behälters 2 zu pressen. Hierzu ist im Inneren des Deckels 6 ein Tragelement 14 angeordnet, das für ein Federelement in Form einer als Tellerfeder 15 ausgebildeten Verriegelungsfeder vorgesehen ist.

Die Tellerfeder 15 weist, wie in Fig. 2a dargestellt, sektorförmige Ausschnitte auf und kann daher in Form einer Kalotte als vorgespanntes Federelement, das einerseits zentral fix gehalten und peripher in der Ringnut 16 der Dichtung 7 eingerastet ist, über das Verschiebeglied 9 mittelbar in ihrer radialen Erstreckung verändert werden. Hierzu ist der Boden 12 des Deckels 6 im zentralen Bereich der Anlagefläche 8 von einem Hohlstab 17 durchsetzt, in dem dicht und verschiebbar ein Stellelement 18 für den Stützkorb 19 gelagert ist, der mit der Tellerfeder 15 zusammenwirkt. Der Hohlstab 17 weist an seinem oberen Ende das als Befestigungsflansch ausgebildete Tragelement 14 auf.

Die Funktion der oben beschriebenen Konstruktion ist folgende: Die Tellerfeder 15 weist in ihrem vorgespannten Zustand einen kleineren Durchmesser als der innere Rand der Dichtung D des Verschlussgliedes 4 auf. Die Tellerfeder 15 kann also, allenfalls unter Verbiegung, leicht soweit über die Dichtung 7 oder auch an oder über einen anderen die Feder 15 festhaltenden, von der wulstförmigen Dichtung D des Verschlussgliedes 4 gebildeten Vorsprung geschoben werden. Sodann wird der Stützkorb 19 über das Stellelement 18 abwärts gezogen und drückt auf den kalottenförmigen Federbauch der Tellerfeder 15. Die Tellerfeder 15 wird flacher, in ihrer radialen Erstreckung grösser und rastet in die Nut 16 der Dichtung D. Der Hygiene-Deckel ist somit dicht am Behälter 2 gehalten. Der Deckel weist ebenfalls, wie an Hand der Fig. 1 erläutert, eine Aufspannfläche 8' zur Heranführung des Deckels 6 an den Behälter 2 bzw. zu dessen Entfernung mittels angepasster Verschiebeglieder 9 auf, welche beispielsweise von einem Gummiring G reibungsschlüssig festgehalten wird.

Beim Lösen ist der oben beschriebene Vorgang umgekehrt, d.h. erst wird der Stützkorb 19 durch Drücken von unten über das Stellelement 18 von der Tellerfeder 15 nach oben abgesetzt, wobei sich die Tellerfeder 15 stärker krümmt, ihren Durchmesser verkleinert und den Druck auf die Dichtung D deutlich verringert, so dass der Deckel 6 vom Behälter entfernbar ist.

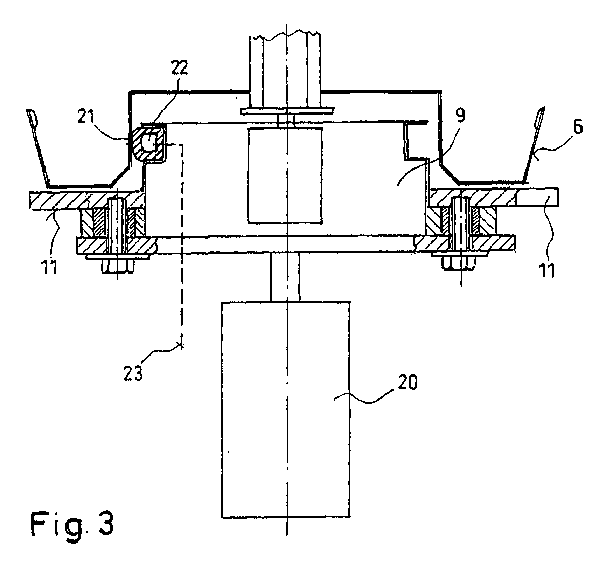

Wie an Hand der Ausführungsform nach Fig. 3 dargestellt, kann der Deckel 6, der die Form gemäss Fig. 2 aufweist, auch durch ein von einen als Hydraulikzylinder 20 angetriebenem Verschiebeglied 9 vom und zum nicht dargestellten Behälter geführt werden. Zur kraftschlüssigen Ankoppelung des Verschiebegliedes 9 an den Deckel 6 weist dieser in seinem peripheren Bereich eine zylindrische Anlagefläche 21 auf, die für einen in seinem Querschnitt durch Druckluft veränderbare als Hohlkörper 22 ausgebildete Blähdichtung vorgesehen ist, die am Verschiebeglied 9 befestigt ist und über die Leitung 23 mit Druckluft versorgt wird. Bei Beaufschlagung des Hohlkörpers 23 mit Druckluft verklemmt er den Deckel 6 mit dem Verschiebeglied 9, so dass alle Bewegungen zur Anbringung od. Entfernung des Deckels durchgeführt werden können. Das Verschiebeglied 9 ist wieder mit der einen Stützflansch bildenden Auflagefläche 11 ausgerüstet, deren Funktion an Hand der Fig. 1 bereits beschrieben wurde. Der als Blähdichtung ausgebildete ringförmige Hohlkörper 22 kann natürlich auch zum Aufspannen des Deckels 6 am Verschiebeglied 9 bei der Ausführungsform nach Fig. 2 vorgesehen werden.

Die Erfindung ist auf die dargestellten Ausführungsbeispiele nicht beschränkt. Die Steuerung der Vorgänge an der Hygienevorrichtung kann händisch oder selbsttätig durch elektromechanische Roboter od. dgl. erfolgen. Für die Steuerung der Drucklufteinrichtungen können programmgesteuerte Ventilsteuereinrichtungen vorteilhaft eingesetzt werden. Auch braucht das Verschiebeglied 9 nicht als Stempel ausgebildet zu werden, sondern kann als den Deckel 6 von aussen mittels einziehbarer von innen her gegen die Wand 21 aufweitbarer konzentrischer Greifer ausggebildet werden, was aber nicht bevorzugt ist.

## Patentansprüche

1. Hygienevorrichtung für einen in einem Auslassbereich mit einer Austrittsöffnung und einem beweglichen, gegen die Aussenseite hin eine exponierte Fläche aufweisenden, Verschlussglied (4) versehenen Behälter (1) für rieselfähiges Schüttgut, welche einen entfembaren Deckel (6) umfasst, der abdeckend zumindest über den Hohlraum des Verschlussgliedes (4) legbar ist und in einem Randbereich (5) eine Anlagefläche (7', 8') zur Anlage an mindestens einen Teil des Auslassbereiches aufweist, mit der der Rand der Austrittsöffnung (3) des Behälters (2) abdeckbar ist, **dadurch gekennzeichnet, dass** der Deckel (6) im Randbereich (5) als elastisch verformbare Dichtung (7) ausgebildet ist, die mindestens einen Teil der Anlagefläche (7', 8') aufweist und an die einen Trichter bildende Wand (1) des Behälters und an die Innenwandung der Verschlußgliedes (4) anlegbar, vorzugsweise anpressbar, ausgebildet ist.

2. Vorrichtung nach Anspruch 1, **dadurch gekennzeichnet, dass** der Deckel (6) zur Gänze aus elastisch verformbarem Material gebildet ist, wobei er gegebenenfalls Zonen unterschiedlicher elastischer Verformbarkeit aufweist und bevorzugt die elastische Verformbarkeit des Deckels (6) in dem die Wandung (1) des Behälters (2) und des Verschlussgliedes (4) und den Rand der Austrittsöffnung (3) abdeckenden Randbereich (5) grösser ist als in seinem zentralen Bereich.

3. Vorrichtung nach einem der vorhergehenden Ansprüche, **dadurch gekennzeichnet, dass** der Deckel (6) zur Aufrechterhaltung einer gewünschten Form mindestens ein Federelement (7a) in seinem Werkstoff, vorzugsweise auch ausserhalb an der vom Behälter abgekehrten Fläche des Deckels (6), insbesondere in einer Zone grösserer elastischer Verformbarkeit, wie dem Randbereich (5), aufweist, das vorzugsweise eine als Klemmeinrichtung ausgebildete Halteeinrichtung für den Deckel (6) zumindest teilweise bildet.

4. Vorrichtung nach einem der vorhergehenden Ansprüche, **dadurch gekennzeichnet, dass** die Anlagefläche (7', 8') des Deckels (6) einen Schnappvorsprung (bei 8') aufweist, der zum Eingriff in eine Ausnehmung oder Nut (16) des Verschlussgliedes (4) ausgebildet ist, und dass vorzugsweise dieser Schnappvorsprung an mindestens einem Federelement (15) an einem innerhalb des Deckels (6) angeordneten Tragelement (14) vorgesehen ist, das über eine, vorzugsweise mechanische, Stelleinrichtung (18) in seiner Position und/ oder Streckung in Richtung in die Ausnehmung des Verschlussgliedes (4) veränderbar ausgebildet ist, wobei im besonderen das Federelement als vorgespannte Tellerfeder (15) mit sektorförmigen Ausnehmungen ausgebildet ist, an welcher ein an sich starr ausgebildeter und zu dieser konzentrisch angeordneter Stützkorb (19) anliegt, der in seinem Abstand zur Tellerfeder (15) und auch zum Deckel (6) über die Stelleinrichtung (18) einstellbar ist, und dass zweckmässig zumindestens ein Betätigungselement der Stelleinrichtung (18) gedichtet durch den Boden (12) des Deckels (6) geführt ist.

5. Vorrichtung nach einem der vorhergehenden Ansprüche, **dadurch gekennzeichnet, dass** der Deckel (6) topfförmig ausgebildet ist, vorzugsweise als lediglich in Richtung zur Austrittsöffnung (3) des Behälters (2) hin runder und offener Topf, der vorzugsweise eine den Boden (12) des Deckels (6) umgebende Wandung (13) aufweist, und an dem in einem Abstand ein elastisch verformbarer Randbereich (5) zur Abdichtung der Berandung der Austrittsöffnung (3) des Behälters (2) ausgebildet ist.

6. Verfahren zum Montieren einer Hygienevorrichtung nach einem der vorhergehenden Ansprüche an einem Verschlussglied (4) eines Behälters, **dadurch gekennzeichnet, dass** eine Hygienevorrichtung nach einem der Ansprüche 1 bis 5 vorgesehen wird und der Deckel (6)
a) auf einem Stempel (9) aufgespannt wird und
b) anschliessend mittels einer Anpressfläche (11) auf das Verschlussglied (4) aufgepresst wird.

7. Verfahren nach Anspruch 6, **dadurch gekennzeichnet, dass** der Schritt a) auch ein elastisches Verformen des Deckels (6), insbesondere durch pneumatische Mittel, umfasst.

8. Stempel zur Durchführung des Verfahrens nach Anspruchs 6 oder 7, **dadurch gekennzeichnet, dass** er (9) mindestens eine Aufspannfläche (Af) für den Deckel (6) sowie eine flanschartig abstehende Anpressfläche (11) aufweist.

## Claims

1. Hygiene device for a container (1) for fluid bulk material whose discharge zone includes a discharge opening and a movable closure member (4) which includes an exposed surface at its exterior, the device comprising a removable lid (6) which may be laid at least over the cavity of said closure member (4) to cover it and whose marginal zone (5) has an engagement surface (7', 8') for engaging at least part of said discharge zone and to cover the edge of said discharge opening (3) of said container (2), **characterised in that** said marginal zone (5) of said lid (6)is formed as an elastically deformable sealing (7) which includes at least part of said engagement surface (7'. 8'), and which is formed to engage, preferably to be pressed against, the hopper forming wall (1) of said container and the inner wall of said closure member (4).

2. Device according to claim 1, **characterised in that** said lid (6) is entirely formed of an elastically deformable material, optionally comprising zones of different elastic deformability, wherein the elastic deformability of said lid (6) is preferably greater in the marginal zone (5), which covers the wall (1) of the container (2) and the closure member (4) and the edge of said discharge opening (3), than in its central zone.

3. Device according to any of the preceding claims, **characterised in that** the material of said lid (6) comprises at least one spring element (7a) for maintaining a desired shape, preferably also outside that surface of said lid (6) which is averted from said container, particularly in a zone of greater deformability, such as in said marginal zone (5), said element preferably forming at least in part holding means for said lid (6) formed as a clamping device.

4. Device according to any of the preceding claims, **characterised in that** said engagement surface (7', 8') of said lid (6) comprises a snap salient (at 8') formed to engage a recess or groove (16) of said closure member (4), and that preferably this snap salient is provided at at least one spring element (15) on a support element (14) arranged within said lid (6) and being formed to vary its position and/or extension in the direction into said recess of said closure member (4) by, preferably mechanical, control means (18), said spring element being in particular formed as a prestressed cup spring (15) having sector-shaped recesses and being engaged by a concentrically arranged support basket (19) rigidly formed it-self whose distance to said cup spring (15) and also to said lid (6) is adjustable by said control means (18), and that suitably at least one actuating element of said control means (1§8) passes sealingly through the bottom (12) of said lid (6).

5. Device according to any of the preceding claims, **characterised in that** said lid (6) is cup-shaped, preferably as a cup that is round and open solely in direction towards said discharge opening (3) of said container (2), which, as preferred, comprises a wall (13) surrounding the bottom (12) of the lid (6) and on which an elastically deformable marginal zone (5) for sealing the edge of said discharge opening (3) of said container (2) is formed in a distance.

6. A method for mounting a hygiene device according to any of the preceding claims to a closure member (4) of a container, **characterised in that** a hygiene device according to any of claims 1 to 5 is provided, and that the lid (6) is
a) fixed to a punching element (9) and
b) is subsequently pressed to said closure member (4) by a pressure surface (11).

7. Method according to claim 6, **characterised in that** step a) comprises also elastically deforming said lid (6), particularly by pneumatic means.

8. Punching element for carrying out the method according to claim 6 or 7, **characterised in that** it (9) comprises at least one fixing surface (Af) for said lid (6) as well as a flange-like projecting pressure surface (11).

## Revendications

1. Dispositif d'hygiène pour un récipient pour une matière à écoulement en vrac, ledit récipient étant prévu d'une ouverture de sortie dans une zone de sortie et d'un organe de fermeture (4) amovible, qui présente une surface exposée vers son côté extérieur, ledit dispositif comprenant un couvercle enlevable (6), qui peut être posé au moins sur la cavité de l'organe de fermeture (4) en le couvrant et comprend une surface de contact (7', 8') dans une zone marginale pour contacter au moins un part de la zone de sortie, avec laquelle le bord de l'ouverture de sortie (3) du récipient (2) peut être couvert, **caractérisé en ce que** la zone marginale (5) du couvercle (6) est formée comme garniture élastiquement déformable (7), qui présente au moins un part de la surface de contact (7', 8') et qui est formée à contacter, préférablement sous pression, la paroi (1) du récipient et la paroi intérieure de l'organe de fermeture (4).

2. Dispositif selon la revendication 1, **caractérisé en ce que** le couvercle (6) est formé entièrement d'un matériau élastiquement déformable, et présente, le cas échéant, des zones d'une déformabilité élastique différente, la déformabilité élastique du couvercle (6) étant préférablement plus grande dans la zone marginale (5), qui couvre la paroi () du récipient (2) et de l'organe de fermeture (4) et le bord de l'ouverture de sortie (3), que dans sa zone centrale.

3. Dispositif selon une quelconque des revendications précédentes, **caractérisé en ce que** le couvercle (6) présente au moins un élément de ressort (7a) dans son matériau, de préférence aussi extérieurement à la surface du couvercle (6) opposée au récipient, particulièrement dans une zone de déformabilité élastique élevée, comme dans la zone marginale (5), qui forme préférablement au moins en part un dispositif de retenue pour le couvercle (6) formé comme dispositif de coincement.

4. Dispositif selon une quelconque des revendications précédentes, **caractérisé en ce que** la surface de contact (7', 8') du couvercle (6) comprend une baguette encliquetable (à 8'), qui est formée pour s'accrocher à un creux ou rainure (16) de l'organe de fermeture (4), et que cette baguette encliquetable est prévue de préférence à au moins un élément des ressort (15) d'un élément de support situé à l'intérieur du couvercle (6), dont la position et/ou extension en direction dans le creux de l'organe de fermeture (4) est formé de manière variable au moyens d'un dispositif de réglage (18), préférablement mécanique, l'élément de ressort étant particulièrement formé comme ressort Belleville précontrainte (15) ayant des creux en forme de secteurs, qui est contacté un panier de support (19) rigide lui-même et concentriquement disposé à celui-ci, dont la distance au ressort Belleville (15) et aussi au couvercle (6) peut être ajustée par le dispositif de réglage (18), et qu'au moins un élément d'actionnement du dispositif de réglage (18) passe convenablement d'une manière étanche par le fond (12) du couvercle (6).

5. Dispositif selon une quelconque des revendications précédentes, **caractérisé en ce que** le couvercle (6) est formé en pot, préférablement comme pot rond et ouvert seulement en direction vers l'ouverture de sortie (3) du récipient (2), qui présente de préférence une paroi (13) entourant le fond (12) du couvercle (6), et auquel une zone marginale (5) élastiquement déformable est formé dans une distance pour étancher le bord de l'ouverture de sortie (3) du récipient (2).

6. Procédé de montage d'un dispositif d'hygiène selon une quelconque des revendications précédentes à un organe de fermeture (4) d'un récipient, **caractérisé en ce qu'**un dispositif d'hygiène selon une quelconque des revendications 1 à 5 est prévu, et que le couvercle (6) est
a) fixé à une étampe et
b) est pressé en suite à l'organe de fermeture (4) au moyens d'une surface de pression (11).

7. Procédé selon la revendication 6, **caractérisé en ce que** l'étape a) comprend aussi une déformation élastique du couvercle (6), particulièrement par des moyens pneumatiques.

8. Etampe pour l'exécution du procédé selon la revendication 6 ou 7, **caractérisée en ce qu'**elle (9) présente au moins une surface de fixation (Af) pour le couvercle (6) ainsi qu'une surface de pression (11) saillant d'une façon de collerette.
